# EUROPÄISCHE PATENTSCHRIFT

(11) **EP 3 580 055 B1**
(45) Veröffentlichungstag und Bekanntmachung des Hinweises auf die Patenterteilung: **16.09.2020**
(21) Anmeldenummer: 18701341.2
(22) Anmeldetag: 24.01.2018
(51) Int. Cl.: B32B 3/26, B32B 5/14, B32B 7/12, B32B 15/085, B32B 15/088, B32B 15/09, B32B 15/20, B32B 27/08, B32B 27/32, B32B 27/34, B32B 27/36

(54) **VERBUNDFOLIE ZUR HERSTELLUNG VON VERPACKUNGEN**
COMPOSITE FILM FOR PRODUCING PACKAGING
FILM COMPOSITE POUR LA FABRICATION D'EMBALLAGES

(30) Priorität: 09.02.2017 AT 501032017
(43) Veröffentlichungstag der Anmeldung: 18.12.2019
(73) Patentinhaber: Constantia Pirk GmbH & Co. KG, 92712 Pirk (DE)
(72) Erfinder: REICH, Peter, 92721 Störnstein (DE); BARBISCH, Christian, 2100 Korneuburg (AT); KICK, Markus, 92637 Weiden (DE)
(74) Vertreter: Patentanwälte Pinter & Weiss OG
(86) Internationale Anmeldenummer: PCT/EP2018/051725
(87) Internationale Veröffentlichungsnummer: WO 2018/145902

(56) Entgegenhaltungen:
- WO-A1-02/42069
- US-A1- 2006 088 691

## Beschreibung

Die Erfindung betrifft eine Verbundfolie, insbesondere zur Herstellung von Verpackungen, wie etwa Beutelverpackungen, mit zumindest einer Einstichstelle, beispielsweise für einen Trinkhalm, wobei die Verbundfolie zumindest eine siegelbare Innenschicht, gegebenenfalls zumindest eine Mittelschicht und zumindest eine Außenschicht aufweist. Weiters betrifft die Erfindung ein Verfahren zur Herstellung einer Verbundfolie, wobei zumindest eine siegelbare Innenschicht, gegebenenfalls zumindest eine Mittelschicht und zumindest eine Außenschicht in einer Schichtfolge a) Innenschicht(en) b) gegebenenfalls Mittelschicht(en) c) Außenschicht(en), aneinander kaschiert werden.

Die Erfindung betrifft auch eine Verpackung mit einer solchen Verbundfolie sowie ein Verfahren zur Herstellung der Verpackung.

Verpackungen für Getränke, die mit einer Einstichstelle für einen Trinkhalm versehen sind, erfreuen sich aufgrund ihrer einfachen Handhabung großer Beliebtheit bei den Konsumenten. Die Verpackungen können beispielsweise als Beutelverpackungen ausgebildet sein, wobei nach dem Konsumieren des Inhalts zum Entsorgen lediglich ein leerer, dünnwandiger und leichter Beutel verbleibt.

Als Verpackungsmaterial wird insbesondere für Beutelverpackungen im Allgemeinen eine Verbundfolie mit einem im Wesentlichen dreischichtigen Aufbau verwendet, wobei die Innenlage aus einem siegelbaren und für Lebensmittel geeignetem Material besteht, die Außenlage insbesondere die Durchstoßfähigkeit und Stabilität des Material verbessert und die Mittellage insbesondere die Barriereeigenschaften verbessert.

Auch für die Hersteller bietet diese Art der Verpackung zahlreiche Vorteile, da die Beutel aus der vorgefertigten Verbundfolie mit den entsprechenden Maschinen einfach hergestellt und befüllt werden können. Als Ausgangsmaterial müssen im Wesentlichen lediglich die vorgefertigte, auf Rollen bereitgestellte Verpackungsfolie und das flüssige Produkt der Abfüllanlage zugeführt werden. Das Zuschneiden der Verpackungsfolie, das Befüllen und Versiegeln kann somit mit einem hohen Automatisierungsgrad in der Abfüllanlage mit hoher Geschwindigkeit erfolgen.

Nachteilig ist jedoch, dass bei der Herstellung der Verpackungen die Einstichstelle für den Trinkhalm an der dazu vorgesehenen Stelle erst in die Verbundfolie eingebracht werden muss. Dies geschieht derzeit meist inline mit dem oben beschriebenen Abfüllvorgang, wobei dazu derzeit mehrere Systeme zur Einbringung einer Einstichstelle bekannt sind.

EP 0600502 B1 offenbart einen Getränkebehälter aus Monomaterial oder mehrschichtigem Verbundmaterial, der mit einer Einstichsöffnung zum Einstechen eines Trinkhalms versehen ist. Dazu wird durch alle Materialschichten eine Einstichsöffnung gestanzt, und dieses Loch wird auf der Innenseite (d.h. der siegelbaren Seite) des Materials durch einen aufgeschweißten und durchstoßbaren "Flicken" verschlossen. Da das siegelbare Material, aus dem der Flicken besteht, keine ausreichenden Barriereeigenschaften hat, muss bei derartigen Einstichsöffnungen an der Außenfläche meist noch eine zusätzlicher Abziehkleber vorgesehen werden, der vor der Verwendung vom Benutzer vor dem Durchstechen entfernt und entsorgt werden muss. Auch bildet sich am Rand des Stanzlochs zwischen dem Flicken und dem Verpackungsmaterial herstellungsbedingt eine Fuge, in der sich Verunreinigungen bilden können. Weiters entstehen bei der Herstellung erhebliche Mengen an Stanzabfall, die die einerseits Entsorgungskosten verursachen und andererseits die Materialausnutzung reduzieren.

WO 97/46459 offenbart eine Beutelverpackung aus einem Verbundmaterial mit einer Einstichstelle, die vor dem Laminieren als "Loch" in der äußeren Polyesterschicht des Verbundmaterials eingebracht wird. Zusätzlich wird der verbleibende Verbund im Bereich der Einstichstelle durch einen Laser geschwächt. Die Verwendung eines Lasers beschränkt jedoch die Verarbeitungsgeschwindigkeit stark und erhöht die Kosten einer solchen Verbundfolie.

In der EP 2374610 A1 ist eine Beutelverpackung aus einem Verbundmaterial mit einer Innenschicht aus Polyethylenterephthalat, einer Mittelschicht aus Aluminium und einer Außenschicht aus Polyethylen offenbart. Der Bereich einer Einstichstelle wird durch eine kreisrunde Perforierung in der Außenschicht definiert. Nachteilig ist dabei unter anderem, dass die Spitze des Trinkhalms exakt am perforierten Rand der Einstichsöffnung angesetzt werden muss, da sich das Verbundmaterial ansonsten nicht mit der Kraft, die mit einem Trinkhalm aufgebracht werden kann, durchstechen lässt. Da die PET-Schicht keine Perforierung aufweist, ist zu erwarten, dass weiterhin eine sehr hohe Durchstoßkraft erforderlich ist.

WO 02/42069 A1 offenbart eine Verbundfolie mit zumindest einer siegelbaren Innenschicht und zumindest einer Außenschicht, wobei die Außenschicht eine Vielzahl an Löchern aufweist, die in einem flächigen Muster angeordnet sind und die Verbundfolie nicht vollständig durchdringen.

US 2006/088691 offenbart ein Verpackungsbehälterverbundmaterial für Getränke, in das ein Strohhalm leicht insertiert werden kann, und welches verläßlich versiegelt werden kann.

Die gegenständliche Erfindung hat die Aufgabe, kostengünstige und einfache Lösungen für die Herstellung von mit Einstichstellen versehenen Verpackungen bereitzustellen, die die Nachteile des Standes der Technik vermeiden. Insbesondere soll das Merkmal der Einstichstelle bereits in der Verbundfolie enthalten sein, sodass vom Abfüller keine zusätzlichen Schritte für die Herstellung der Einstichstelle erforderlich sind, und dass

Stanzabfall minimiert oder gänzlich vermieden wird.

Diese und weitere Aufgaben werden erfindungsgemäß durch eine Verbundfolie der eingangs genannten Art gelöst, wobei in der Verbundfolie an dem zumindest einen für die Einstichstelle in der Verpackung vorgesehenen Bereich ein Nadelungsbereich mit einer Vielzahl an Nadellöchern vorgesehen ist, wobei die Nadellöcher in einem flächigen Muster angeordnet sind und die Verbundfolie nicht vollständig durchdringen. Ein solches Muster an Nadellöchern beeinträchtigt die Festigkeit der gesamten Verbundfolie nur unwesentlich und weist ein unversehrtes Erscheinungsbild auf. Dennoch ist die Durchstoßfähigkeit im Bereich der Einstichstelle gegeben. Die Auswahl der Position, an der die Einstichstelle an der Verpackung vorgesehen sein soll, ist verglichen mit dem Stand der Technik erheblich größer, da keine zusätzlichen störenden Elemente an der Einstichstelle angeordnet sein müssen. Auch kann der Nadelungsbereich in die Bereiche von Siegelnähten reichen, ohne dass dies Probleme bereitet. Da die Nadellöcher das Verbundmaterial nicht vollständig durchringen, ist die Oberfläche, die mit dem Produkt in Kontakt kommt, unversehrt. Dies ist insbesondere im Bereich der Food-Verpackungen und allgemein für verderbliche Güter wichtig.

In vorteilhafter Weise können die Nadellöcher die Außenschicht vollständig durchdringen, wobei die Innenschicht und gegebenenfalls die Mittelschicht unversehrt sind. Dadurch bleiben sowohl die Eigenschaften der Mittelschicht (z.B. die einer Gasbarriere), als auch der Innenschicht (also insbesondere die Lebensmitteleignung und die Siegelbarkeit) gewahrt.

In einer vorteilhaften Ausführungsform kann die Innenschicht ein siegelbares Material, vorzugsweise Polyethylen, aufweisen. Polyethylen ist für Lebensmittel gut geeignet und weist hervorragende Siegeleigenschaften auf. Die Innenschicht kann entweder durch "klassische" Laminierverfahren, d.h. mit Feucht- oder Trockenkaschierklebern auf die Mittelschicht aufgebracht werden, oder sie kann durch Extrusionslamination direkt oder mithilfe von Zwischenschichten auf die Mittelschicht auflaminiert werden. Gegebenenfalls können die Mittelschicht und die Innenschicht auch durch Coextrusion hergestellt werden, falls dies die Materialkombination zulässt. Gegebenenfalls kann die Mittelschicht als Kaschierkleberschicht ausgebildet sein. Die Innenschicht kann auch als Siegelschicht aus einem aufgebrachten Heißsiegellack bestehen.

In vorteilhafter Weise kann zumindest eine Mittelschicht eine Gasbarriereschicht, vorzugsweise aus einem Metall, insbesondere Aluminium, sein. Dies erhöht die Haltbarkeitsdauer der mittels der Verbundfolie abgepackten Produkte.

Eine weitere vorteilhafte Ausführungsform kann vorsehen, dass die Außenschicht ein die Zug- und/oder Durchstoßfestigkeit der Verbundfolie erhöhendes Material, vorzugsweise aus einem Polyester, insbesondere Polyethylenterephthalat, oder einem Äquivalent aufweist. Dies erhöht die Stabilität, Durchstoßfestigkeit und Berstfestigkeit der aus der Verbundfolie hergestellten Verpackungen. Gegebenenfalls kann die Außenschicht auch aus einem siegelbaren Material bestehen oder eine Siegelbare Oberfläche aufweisen. Dadurch lassen sich beispielsweise Spouts an einer Verpackungsaußenseite anbringen.

Die erfindungsgemäße Verbundfolie ist jedoch nicht auf einen dreischichtigen Aufbau beschränkt sondern umfasst alle Folien für den Food-, als auch Non-Food-Bereich, die die erfindungsgemäßen Merkmale aufweisen. Beispielsweise können coextrudierte Duplex- und Triplexfolien mit den erfindungsgemäßen Merkmalen ausgestattet werden. Beispielsweise lässt sich ein coextrudierter oder kaschierter Duplexaufbau Polyethylenterephthalat / Polyethylen vorteilhaft verwenden.

Zwischen der Mittelschicht und der Außenschicht und/oder an der der Mittelschicht gegenüberliegenden Oberfläche der Außenschicht kann in vorteilhafter Weise eine Bedruckschicht vorgesehen sein. Dies erlaubt eine ansprechende optische Gestaltung der Verpackung, wobei die Bedruckschicht zwischen den Schichten geschützt angeordnet sein kann. Da die mit den Nadellöchern hergestellten Einstichstellen an sich optisch unauffällig sind, kann mit der Bedruckschicht auch eine spezielle Gestaltung der Einstichstellen erzielt werden, sodass diese vom Benutzer leicht gefunden wird.

In vorteilhafter Weise können die Nadellöcher in einer parallel zur äußeren Oberfläche der Außenschicht verlaufenden Ebene einen länglichen, vorzugsweise etwa rautenförmigen Querschnitt mit einer Länge und einer Breite aufweisen, wobei das mittlere Längenverhältnis von Länge zu Breite der Nadellöcher in einem Bereich zwischen etwa 1 und etwa 10, vorzugsweise zwischen 2 und 5 liegt. Versuche haben gezeigt, dass sich die Einstichfähigkeit in dieser Weise durch die Auswahl des Längenverhältnisses der Nadellöcher optimal einstellen lässt. Die Form und Größe der Nadellöcher lässt sich insbesondere durch die Form, Größe und Einstichtiefe der Nadeln beeinflussen, mit denen die Löcher eingebracht wurden.

Bevorzugter Weise können die Nadellöcher an der äußeren Oberfläche der Außenschicht eine durchschnittliche Länge zwischen 50 µm und 600 µm aufweisen. Die hierin offenbarten Angaben für die Abmessungen der Nadellöcher beziehen sich dabei auf den Zustand unmittelbar nach dem Einbringen der Nadellöcher, wobei später erfolgende Materialverformungen noch nicht berücksichtigt sind.

In einer vorteilhaften Ausführungsform kann die Außenschicht im Nadelungsbereich eine Nadellochdichte zwischen 50 und 250 Nadellöchern pro cm² aufweisen.

In einer weiteren vorteilhaften Ausführungsform kann zumindest ein Nadelungsbereich eine über die Fläche des Nadelungsbereichs variierende Nadellochdichte aufweisen. Dadurch lassen sich die Einfachheit der Handhabung, die Qualität des Durchstoßlochs und die Dichtungseigenschaften durch eine gezielte Beeinflussung des Nadellochmusters vorteilhaft beeinflussen.

Der Fachmann ist in der Lage, für spezifische Gegebenheiten anhand der hierein offenbarten Lehren und mithilfe von routinemäßigen Tests und Versuche optimale Abmessungen für die Nadelungsbereiche, die Nadellochdichte und die Abmessungen der Nadellöcher aufzufinden. Die oben beschriebene Verbundfolie kann erfindungsgemäß verwendet werden, um eine Verpackung herzustellen. Die Verbundfolie wird dazu gegebenenfalls zugeschnitten, zu einer Verpackung geformt, mit einem Produkt befüllt und versiegelt. Je nach Maschine kann das Zuschneiden inline in der Abfüllanlage erfolgen, oder es werden die bereits zugeschnittenen Verpackungsrohlinge der Maschine zugeführt. Insbesondere kann die Verbundfolie zur Herstellung einer Beutelverpackung verwendet werden.

Die erfindungsgemäße Verbundfolie kann auch zur Herstellung von Verschlussorganen, wie etwa Platinen, vorteilhaft verwendet werden, wobei nicht nur Trinkhalmöffnungen, sondern ganz allgemein leicht durchstoßbare Bereiche vorgesehen sein können, an denen ein Öffnen der Verpackung möglich ist.

Die Verbundfolie kann weiters zur Herstellung von Mikrowellenverpackungen verwendet werden, die vor dem Erwärmen angestochen werden müssen, um eine Entweichen von Dampf zu ermöglichen. Die Nadelungsbereiche erlauben dabei die Ausbildung definierter Einstichstellen, die mit einer verringerten Durchstoßkraft eingestochen werden können.

Ein weiteres vorteilhaftes Anwendungsgebiet ist der Bereich von Trennfolien, wie sie zum Beispiel in Seifenbehältern vorgesehen sein können, und die durch einen Benutzereingriff vor der ersten Verwendung durchstoßen werden müssen, beispielsweise durch Herunterdrücken eines Pumpkopfes.

Auch für selbstöffnende Spouts, die beispielsweise an der Außenseite einer Verpackung angeschweißt sind, können mit der erfindungsgemäßen Folie Verbesserungen erzielt werden. Solche Spouts durchdringen die Folie bei der ersten Verwendung und schneiden eine Öffnung in das Verpackungsmaterial, sodass der Inhalt über den Spout ausgegossen werden kann. Dieser Vorgang lässt sich mit dem erfindungsgemäßen Verpackungsmaterial erheblich erleichtern, wobei auch eine zusätzliche Dichtwirkung erzielt werden kann, die die Hygieneeigenschaften des Spouts verbessern, sobald dieser erstmals geöffnet wurde.

In einem Aspekt betrifft die Erfindung ein Verfahren zur Herstellung einer Verbundfolie, wobei zumindest eine siegelbare Innenschicht, zumindest eine Mittelschicht und zumindest eine Außenschicht in einer Schichtfolge a) Innenschicht(en) b) gegebenenfalls Mittelschicht(en) c) Außenschicht(en) aneinander kaschiert werden. Erfindungsgemäß wird an zumindest einem für eine Einstichstelle in einer Verpackung vorgesehenen Bereich der Verbundfolie zumindest ein Nadelungsbereich mit einer Vielzahl an Nadellöchern in die Außenschicht eingebracht, wobei die Nadellöcher im Nadelungsbereich in einem flächigen Muster angeordnet sind und die Verbundfolie nicht vollständig durchdringen.

In vorteilhafter Weise kann zumindest eine Nadelungsbereich vor dem Kaschieren der Außenschicht mit der Mittelschicht und/oder der Innenschicht in die Außenschicht eingebracht werden. Dies erleichtert das Herstellungsverfahren. Die Nadelung kann von der Oberseite, von der Unterseite oder auch von beiden Seiten in die Außenschicht eingebracht werden.

In einer vorteilhaften Ausführungsform können die Nadellöcher mittels einer Nadelwalze mit an der Nadelwalze vorgesehenen Nadeln in die Außenschicht eingebracht werden. Die Nadellöcher werden dabei so eingebracht, dass sie die Verbundfolie nicht vollständig durchdringen, und somit die Dichtheit der Verbundfolie gewährleistet bleibt. Die Nadellöcher können in die fertige Verbundfolie eingebracht werden, wobei die Zustellung der Nadelwalze zu einer entsprechenden Gegendruckwalze derart eingestellt wird, dass die Nadeln die Folie nicht vollständig durchdringen. Bevorzugter Weise werden die Nadellöcher jedoch in ein Vorprodukt eingebracht, also beispielsweise in eine Folie, die danach als Außenschicht auf die Mittelschicht kaschiert wird. Gegebenenfalls können auch Teilverbunde, also beispielsweise ein Verbund aus Mittelschicht und Außenschicht, genadelt werden, und dann eine unversehrte Innenschicht aufgebracht werden. Dadurch lassen sich neben den "klassischen" Kaschiervorgängen, also Nass- und Trockenkaschierung mit Kaschierklebersystemen, auch Verfahren zur Extrusionskaschierung und/oder CoExtrusionsverfahren vorteilhaft einsetzen und in den Herstellungsprozess integrieren.

Um zu vermeiden, dass der noch flüssige Kaschierkleber beim Kaschieren durch die Nadellöcher dringt, wird dieser vorzugsweise auf die mit der Außenschicht zu kaschierende Schicht (d.h. Mittelschicht oder Innenschicht) aufgebracht und vor dem Verbinden der Schichten vorgetrocknet, wobei bekannte Verfahren zur Anwendung kommen können. Zu diesem Zweck können auch Trockenkaschierklebersysteme vorteilhaft verwendet werden. Bei Coextrusionsverfahren kann die Viskosität der extrudierten Schicht(en) so eingestellt werden, dass das Extrudat nicht durch die Nadellöcher fließt.

In vorteilhafter Weise kann zur Nadelung eine Nadelwalze verwendet werden, die den Nadelungsbereichen entsprechende Nadelbereiche aufweist, in denen die Nadelwalze eine Nadeldichte zwischen 50 und 250 Nadeln pro cm² aufweist. Die Nadelbereiche entsprechen vorzugsweise im Wesentlichen der Fläche einer Einstichstelle und deren Anordnung ist an die herzustellenden Verpackungen angepasst. Wenn eine Folie zwischen der Nadelwalze und einer Gegendruckwalze hindurchgeführt wird, erzeugen die Nadelbereich der Nadelwalze die Nadelungsbereiche in der Folie. Eine höhere Nadeldichte ist zwar in der Herstellung aufwändiger, sie verbessert aber die Standzeit der Nadelwalze.

In einer bevorzugten Ausführungsform können die Nadelungsbereiche nach einem Bedrucken der Außenschicht in die Außenschicht eingebracht werden. Die Nadelwalze kann dabei in eine Druckmaschine integriert werden, beispielsweise als letztes Walzenpaar einer Druckmaschine. Als "Walzenpaar" wird dabei die Nadelwalze und eine entsprechende Gegendruckwalze bezeichnet. Die Oberfläche der Gegendruckwalze kann beispielsweise aus einem gummielastischen gebildet sein, sodass trotz der das Folienmaterial durchdringenden Nadelspitzen eine hohe Standzeit für die Gegendruckwalze erzielt werden kann.

Die Nadellöcher werden mit auf der Nadelwalze vorgesehenen Nadeln eingebracht, wobei die Nadeln in einer vorteilhaften Ausführungsform einen länglichen, vorzugsweise im Wesentlichen rautenförmigen Querschnitt aufweisen. Für die Herstellung solcher länglichen Querschnitte kann auf bekannte Herstellungsverfahren für Nadelwalzen zurückgegriffen werden.

In vorteilhafter Weise kann der Querschnitt der Nadeln an deren Basis eine Länge und eine Breite aufweisen, wobei das mittlere Längenverhältnis von Länge zu Breite der Querschnitte der Nadeln in einem Bereich zwischen etwa 1 und etwa 10, vorzugsweise zwischen 2 und 5 liegt.

In einer weiteren vorteilhaften Ausführungsform können die Nadeln eine Höhe von zwischen etwa 150 µm und 350 µm, vorzugsweise etwa 150 µm, aufweisen und an ihrer Basis eine Länge von zwischen etwa 50 µm bis etwa 600 µm aufweisen.

Der Fachmann ist in der Lage, für spezifische Gegebenheiten anhand der hierein offenbarten Lehren und mithilfe von routinemäßigen Tests und Versuche optimale Abmessungen für die Nadeln, die Nadeldichte und die Abmessungen der Nadeln aufzufinden

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig. 1 eine schematische Darstellung der erfindungsgemäßen Verbundfolie;
Fig. 2 eine beispielhafte schematische Darstellung der Arbeitsschritte eines Herstellungsverfahrens der erfindungsgemäßen Verbundfolie;
Fig. 3 eine vergrößerte schematische Darstellung eines Nadelbereichs einer Nadelwalze;
Fig. 4 eine vergrößerte schematische Darstellung einer einzelnen Nadel einer Nadelwalze und
Fig. 5 eine schematisierte schaubildliche Darstellung einer erfindungsgemäßen Verpackung.

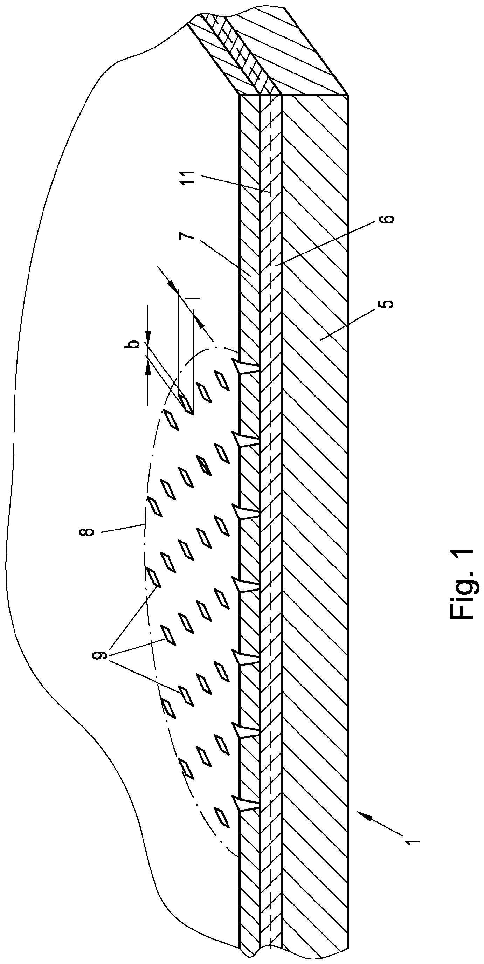

Fig. 1 zeigt eine erfindungsgemäße Verbundfolie 1 in einer schematischen Darstellung, wobei die Größenverhältnisse aus Gründen der Darstellbarkeit stark verzerrt sind. Die Verbundfolie 1 besteht im Wesentlichen aus drei funktionellen Schichten, einer Innenschicht 5, einer Mittelschicht 6 und einer Außenschicht 7, die in dieser Anordnung aneinander kaschiert sind. Die zeitliche Reihenfolge, in der die Kaschierung der Schichten erfolgt, ist erfindungsgemäß unerheblich und kann an die jeweiligen Schichtkombinationen und Herstellungsverfahren optimal angepasst werden. Die zwischen den Schichten angeordneten Kaschierkleberschichten sind in Fig. 1 nicht dargestellt, es wird als allgemeines Fachwissen des Fachmanns angesehen, wie solche Kaschierschichten herzustellen sind. Der Fachmann kann ohne Weiteres geeignete Kaschierverfahren für die jeweilige Anwendung bzw. Materialkombination auswählen.

Die Innenschicht 5 besteht aus einem für Lebensmittel geeigneten, siegelbaren Material, wobei Polyolefine, insbesondere Polyethylen und Polypropylen aufgrund seines guten Kosten-Nutzen-Verhältnisses und der allgemeinen Verfügbarkeit besonders bevorzugt sind. Für besondere Anforderungen können jedoch auch andere Materialien und/oder Materialmischungen und/oder Materialverbunde als Innenschicht verwendet werden. Die Innenschicht kann auch aus einem Heißsiegellack bestehen.

Die Mittelschicht 6 kann eine Gas- und UV-Barriereschicht sein, wobei insbesondere Aluminiumfolie bevorzugt verwendet werden kann. Aluminium ist kostengünstig, gut verarbeitbar, verstärkt die Festigkeit der Verbundfolie 1 und bietet ausgezeichnete Barriereeigenschaften. Als Mittelschicht können beispielsweise auch bedampfte Barrierefolien verwendet werden, beispielsweise metallisiertes, orientiertes Polyamid.

Die Innenschicht 5 kann beispielsweise auf die Mittelschicht 6 in einer oder in mehreren Schichten aufextrudiert sein, wobei gegebenenfalls eine zwischenliegende Extrusionskaschierkleberschicht vorgesehen sein kann. Falls die Mittelschicht 6 aus einem extrudierbaren Material (oder Materialverbund) besteht, können die beiden Schichten auch durch Coextrusion hergestellt sein.

Die Außenschicht 7 besteht aus einem Material, das dem Verbund in Verbindung mit den anderen Schichten eine hohe Zug- und Durchstoßfestigkeit verleiht und eine optimale Zähigkeit aufweist. Bevorzugte Materialien sind Polyester, wie etwa Polyethylenterephthalat, Polyamide oder Verbundstoffe, die solche Materialien beinhalten. Die Festigkeit kann durch Orientieren (beispielsweise in Maschinenlaufrichtung und/oder quer zur Maschinenlaufrichtung) erhöht werden.

Die Schichtdicken der einzelnen Materiallagen sind vorzugsweise aufeinander abgestimmt und so optimiert, dass eine möglichst hohe Berstfestigkeit und Durchstoßfestigkeit für eine aus der Verbundfolie hergestellte Verpackung bei minimaler Schichtdicke erzielt wird. Weiters müssen die Nebenbedingungen berücksichtigt werden, also etwa die ausreichende Siegelbarkeit der Innenschicht 5, die ausreichende Barriereeigenschaft der Mittelschicht, etc.

In einer bevorzugten Ausführungsform weist die Innenschicht 5 (beispielsweise aus Polyethylenterephthalat) eine Dicke von 15 µm bis 200 µm, vorzugsweise zwischen 45 µm und 75 µm auf, die Mittelschicht 6 (beispielsweise aus Aluminium) weist eine Dicke von 4 µm bis 30 µm, vorzugsweise zwischen 6 µm und 12 µm auf und die Außenschicht 7 (beispielsweise aus einem Polyolefin) weist eine Dicke von 3 µm bis 36 µm, vorzugsweise 5 µm bis 12 µm auf. Die bevorzugten Materialdicken sind vom jeweiligen Material und auch vom jeweiligen Verbund und dem Herstellungsverfahren abhängig und können daher von den oben angeführten Richtwerten abweichen.

Die Außenschicht kann auch einen Heißssiegellack aufweisen, der beispielsweise in einer Grammatur von 2,5 g/m² bis 10 g/m² aufgebracht sein kann.

Als Kaschierkleber können herkömmliche bekannte Klebersysteme verwendet werden, beispielsweise ein- oder zweikomponentig verarbeitbare Kaschierklebstoffe auf Basis von Reinpolyesterharz, von Polyester- oder Polyether-Polyurethan, vorzugsweise gehärtet mit aromatischem oder aliphatischem Polyisocyanat, von einem Polyaminopolyurethan, vorzugsweise gehärtet mit Epichlorhydrinharz, oder von einem Epoxidharz, vorzugsweise gehärtet mit einem Polyamid oder mit einem Aminoamid. Außerdem kann ein Kaschierklebstoff auf Basis von ein- oder zweikomponentig verarbeitbarem Poly(meth)acrylat, vorzugsweise gehärtet mit aliphatischem Polyisocyanat, als Kaschierkleber vorgesehen sein. Der Kaschierkleber kann beispielsweise mit einer Grammatur von etwa 1 g/m² bis 6 g/m² (je nach Herstellerangaben) aufgebracht werden. Bei Coextrusionskaschierung kann die Coextrusionsschicht beispielsweise eine Grammatur von etwa 10 g/m² bis etwa 50 g/m² aufweisen.

In die Außenschicht 7 ist innerhalb eines vorzugsweise etwa runden Nadelungsbereichs 8 eine Vielzahl an Nadellöchern 9 eingebracht, wobei die Nadellöcher 9 nur in die Verbundfolie eindringen, diese aber an keiner Stelle durchdringen. Vorzugweise durchdringen die Nadellöcher 9 die Außenschicht 7 lediglich bis zur Mittelschicht 6, und die Mittelschicht 6 und die dahinterliegende Innenschicht 5 sind nicht beeinträchtigt. Die Nadellöcher 9 können dazu beispielsweise in die Außenschicht 7 eingebracht werden, bevor diese auf die Mittelschicht 6 (bzw. den Verbund aus Mittelschicht 6 und Innenschicht 5) kaschiert wird.

Der Nadelungsbereich 8 entspricht hinsichtlich seiner Größe im Wesentlichen dem Durchmesser eines Trinkhalms, der durch eine vom Nadelungsbereich 8 ausgebildete Einstichstelle 3 durchgestoßen werden soll. Je nach Materialkombinationen kann der Nadelungsbereich 8 jedoch auch etwas größer oder kleiner sein, sofern die Durchstoßbarkeit gewährleistet ist. Ein Nadelungsbereich, der einen größere Durchmesser aufweist, als der Trinkhalm, erleichtert das Einstechen bzw. das Auffinden der Einstichstelle, ein Nadelungsbereich, er einen kleineren Durchmesser aufweist, kann durch die erforderliche elastische Materialdehnung im Randbereich eine zusätzliche Abdichtung der Einstichstelle gewährleisten. Es ist auch möglich, sehr große Nadelungsbereiche vorzusehen, die vom Benutzer an einer beliebigen Stelle durchstochen werden können.

Die Nadellöcher 9 weisen eine längliche Form auf mit einer Breite b und einer Länge l auf. Die längliche Form kann beispielsweise durch die Verwendung einer Nadelwalze erzielt werden, die mit länglichen Nadeln versehen ist. Die Form der Nadellöcher 9 kann jedoch auch nach dem Einbringen verändert werden, beispielsweise indem die Außenschicht 7 (oder gegebenenfalls ein Teilverbund oder die gesamte Verbundfolie 1) in Maschinenlaufrichtung und/oder quer zur Maschinenlaufrichtung orientiert wird.

Zwischen der Mittelschicht 6 und der Außenschicht 7 kann eine Druckschicht 11 vorgesehen sein, die bei einem durchsichtigen Material der Außenschicht 7 von außen sichtbar ist. In einer bevorzugten Ausführungsform kann die Druckschicht 11 vor dem Einbringen der Nadellöcher 9 und vor dem Kaschieren der Außenschicht 7 auf die Mittelschicht 6 auf die Lage der Außenschicht 7 aufgedruckt werden.

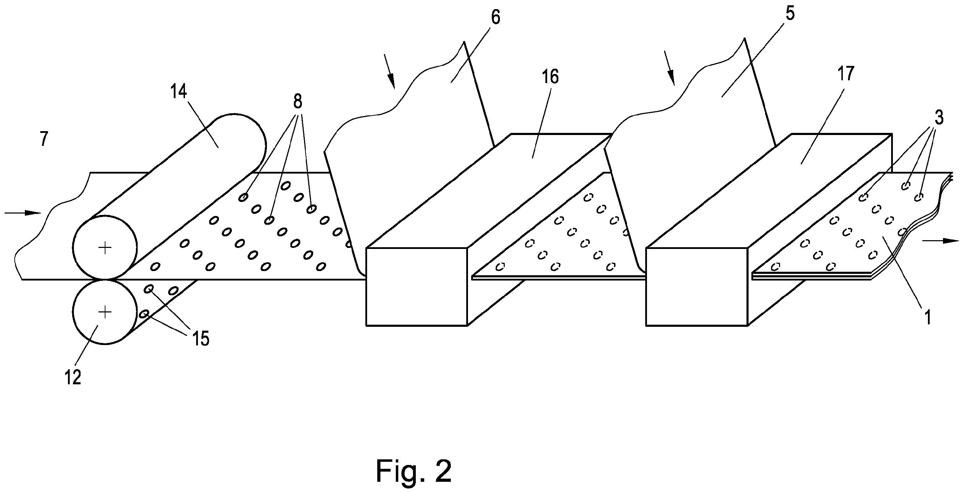

Fig. 2 zeigt in einer schematischen Darstellung ein Verfahren zur Herstellung der Verbundfolie 1. Die Außenschicht 7 wird als Folienbahn zwischen einer Nadelwalze 12 und einer Gegendruckwalze 14 hindurchgeführt, wobei auf der Nadelwalze 12 eine Vielzahl an Nadelbereichen 15 vorgesehen ist, mit denen die Nadelungsbereiche 8 in die zwischen der Nadelwalze 12 und der Gegendruckwalze 14 durchlaufende Folienbahn der Außenschicht 7 eingebracht werden. Dabei kann die Nadelwalze 12 direkt einer Druckmaschine nachgelagert sein, oder auch in die Druckmaschine integriert sein. Zum Beispiel können die Nadelwalze 12 und die Gegendruckwalze 14 als ein letztes Walzenpaar in einer Druckmaschine angeordnet werden. Gegebenenfalls kann die Nadelung auch in einem vom Druckverfahren unabhängigen Fertigungsschritt erfolgen.

Auf die gegebenenfalls bedruckte und mit den Nadelungsbereichen 8 versehen Außenschicht 7 wird dann in einer ersten Kaschieranlage 16 eine Mittelschicht 6 aufkaschiert. Dann wird auf den Verbund aus Außenschicht 7 und Mittelschicht 6 in einer zweiten Kaschieranlage 17 die Innenschicht 5 kaschiert. Die erste Kaschieranlage 16 und die zweite Kaschieranlage 17 sind in Fig. 2 nur schematisch angedeutet. Dem Fachmann ist bewusst, wie eine Kaschierung von zwei (oder mehr) Folien in der Praxis umzusetzen ist und welche Vorrichtungen für welche Kaschierverfahren geeignet sind. Etwaige Umlenkrollen, Aufbringvorrichtungen für Kaschierkleber, Extruder, Trocknungssysteme etc. sind daher in Fig. 2 der Übersichtlichkeit halber nicht dargestellt.

Selbstverständlich ist es auch möglich, die Außenschicht 7 auf einen bereits kaschierten Verbund von Innenschicht 5 und Mittelschicht 6 zu kaschieren, oder Mittelschicht 6 und Innenschicht 5 im Koextrusionsverfahren herzustellen und mit der Außenschicht 7 zu kaschieren. Auch können die Mittelschicht 6 und/oder die Innenschicht 5 auf die jeweils nächste Schicht aufextrudiert sein.

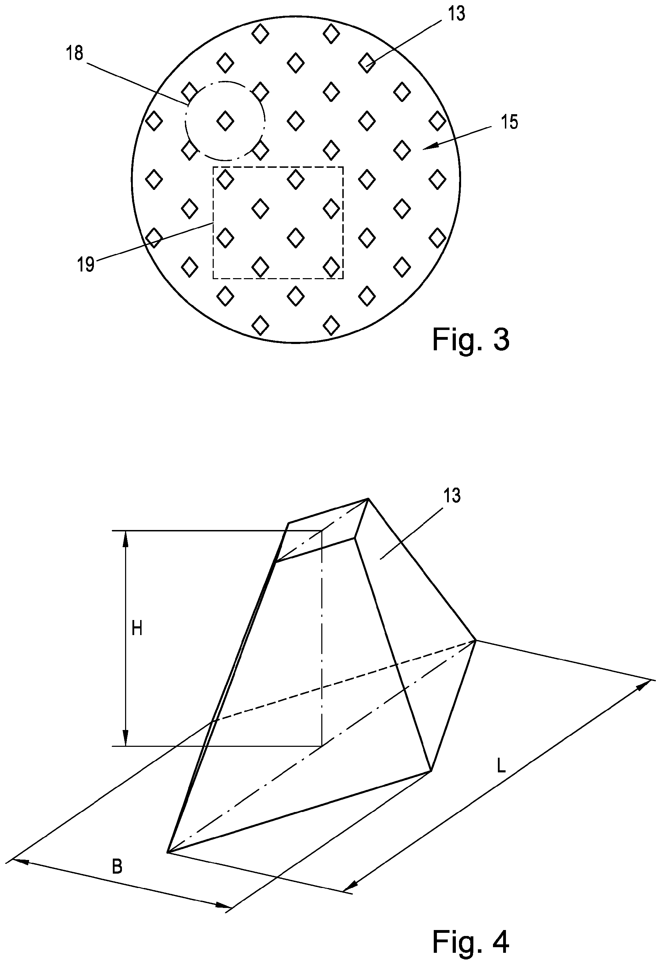

Fig. 3 zeigt eine Draufsicht auf einen Nadelbereich 15, der auf der Nadelwalze 12 angeordnet ist. Der Nadelbereich 15 weist eine Vielzahl an Nadeln 13 auf, die in einem engen Muster nebeneinander angeordnet sind. Das Muster ist vorzugsweise ein regelmäßiges Muster, wobei jede Nadel 13 im Wesentlichen denselben Minimalabstand zur nächstgelegenen Nadel 13 aufweist. Dies ist in Fig. 3 durch den Kreis 18 dargestellt. Dadurch ergibt sich über den gesamten Nadelbereich 15 eine einheitliche Nadeldichte, die als Anzahl an Nadeln innerhalb eines Flächenbereichs definiert ist. Der Flächenbereich ist in Fig. 3 als Rechteck 19 in Strichlinien beispielhaft dargestellt.

Das Muster kann auch eine über die Fläche des Nadelbereichs 15 variierende Dichte aufweisen, gegebenenfalls können auch Nadeln mit unterschiedlicher Längsausrichtung verwendet werden.

Fig. 4 zeigt eine beispielhafte Form einer einzelnen dieser Nadeln 13 in einer axonometrischen Darstellung. Die Nadel 13 weist entlang einer Längsachse der Nadel 13 eine Höhe H auf. Die rautenförmige Basisfläche der Nadel weist eine Länge L und eine Breite B auf. Ein Längenverhältnis L/B von Länge L zu Breite B zwischen etwa 2 und etwa 5 hat sich in praktischen Versuchen als vorteilhaft erwiesen. Einerseits lässt sich damit die Folie gut perforieren, andererseits erfüllen die mit einer solchen länglichen Nadel 13 hergestellten Nadellöcher 8 in optimaler Weise ihren Zweck. Die Rautenform und das Längenverhältnis wird bis zur Nadelspitze hin beibehalten, wobei die Größe des Querschnitts zur Spitze hin stetig abnimmt. Die Längserstreckung der Nadel 13 kann entweder parallel zur Abrollrichtung, quer zur Abrollrichtung oder unter einem beliebigen Winkel zur Abrollrichtung der Nadelwalze 12 angeordnet sein.

Durch standardmäßige Versuche lässt sich eine für das jeweilige zu nadelnde Folienmaterial eine optimale Kombination an Nadeldichte, Nadelhöhe, Längenverhältnis und Winkelanordnung auffinden. Die Nadel 13 kann an ihrer Spitze herstellungsbedingt abgeflacht sein.

Die Herstellung der Nadelwalze kann auf im Stand der Technik bekannte Weise erfolgen. Insbesondere können die Nadeln spanabhebend, durch 3D-Druckverfahren und/oder bekannte vorzugsweise Ätz- oder Gravurverfahren, ähnlich derer die etwa auch für die Herstellung von Druckzylindern verwendet werden, hergestellt werden. Gegebenenfalls können diese und andere Verfahren auch kombiniert angewendet werden.

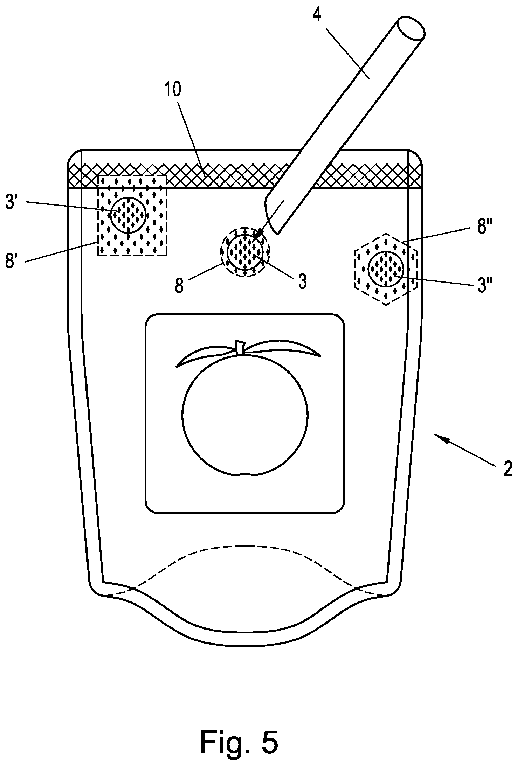

Fig. 5 zeigt ein mit einer erfindungsgemäßen Verbundfolie 1 hergestellte Verpackung 2, die als Standbodenbeutel für ein Getränk ausgebildet ist. In bekannter Weise hat die Verpackung 2 einen Bodenteil und zwei Seitenteile, die jeweils an Siegelnähten 10 miteinander dichtend verbunden sind, sodass das Getränkeprodukt hermetisch verschlossen in der Verpackung 2 abgepackt ist. Die in Fig. 5 dargestellte Vorderseite (gegebenenfalls auch die Rückseite) der Verpackung 2 ist mit einem Druckbild versehen und weist im oberen Bereich eine Einstichstelle 3 auf, die als Nadelungsbereich 8 ausgebildet ist. Da die Nadellöcher 9 des Nadelungsbereichs 8 mit freiem Auge nur schwer zu erkennen sind, ist die Einstichstelle 3 im Druckbild markiert und somit für den Konsumenten gut erkennbar.

Nur im Bereich der Einstichstelle 3 ist es möglich, die Verbundfolie der Verpackung 2 mit einem Trinkhalm 4 zu durchstechen. Da sowohl die Innenschicht 5, als auch die Mittelschicht 6 von den Nadellöchern 9 der Einstichstelle vollkommen unbeeinträchtigt sind, sind die Dichtheit und die Barriereeigenschaften der Verbundfolie auch in diesem Bereich gegeben, sodass keine zusätzliche Abdeckung vorgesehen werden muss, deren Entfernung vom Benutzer als lästig empfunden wird.

Da die Einstichstelle die Verarbeitbarkeit der Verbundfolie kaum beeinträchtigt, ermöglicht die erfindungsgemäße Verbundfolie eine sehr flexible Anordnung der Einstichstelle. In Fig. 5 ist schematisch eine zweite alternative Einstichstelle 3' mit einem zweiten Nadelungsbereich 8' und eine dritte alternative Einstichstelle 3" mit einem dritten Nadelungsbereich 8" angedeutet.

Der zweite Nadelungsbereich 8', in dem die zweite Einstichstelle 3' vorgesehen ist, rechteckig und erheblich größer, als die eigentliche Einstichstelle (die in etwa die Größe eines Trinkhalmdurchmessers aufweist). Der Nadelungsbereich 8' kann an einer beliebigen Stelle mit einem Trinkhalm durchstoßen werden. Es ist zu erkennen, dass der Nadelungsbereich 8' sich zu einem Teil in den oberen Versieglungsbereich 10 erstreckt. Die Verpackung 2 kann also unmittelbar neben dem Versieglungsbereich 10 durchstochen werden, was den Vorgang für den Benutzer erheblich erleichtert, da der Beutel dabei am Versiegelungsbereich gut und sicher festgehalten werden kann.

Der zweite Nadelungsbereich 8" weist eine sechseckige Form auf und ragt in den seitlichen Versiegelungsbereich 10. Auch diese Position erleichtert das Einstechen des Trinkhalms.

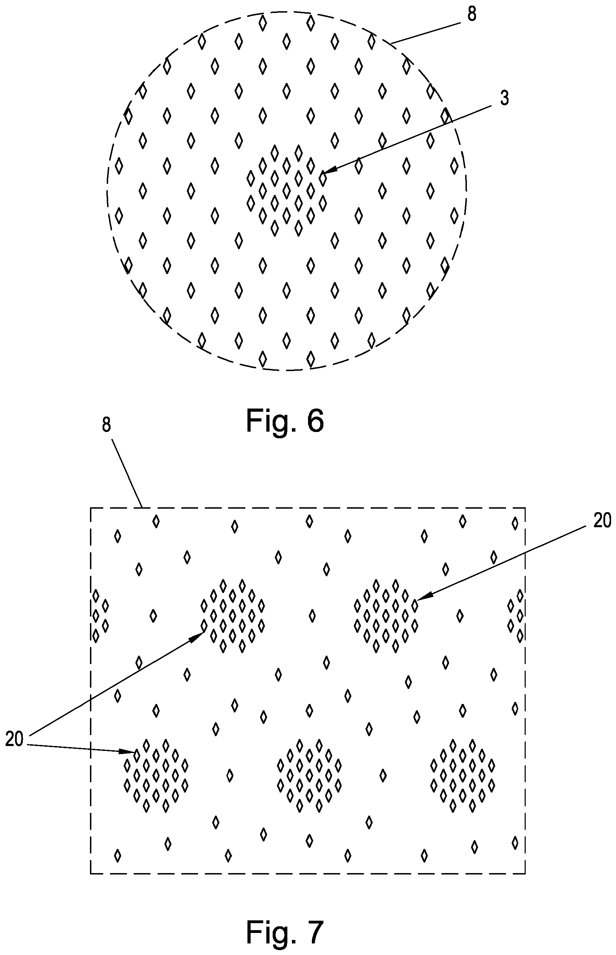

Fig. 6 und 7 zeigen alternative Ausführungsformen des Nadelungsbereichs 8. In Fig. 6 ist ein Nadelungsbereich 8 dargestellt, der eine runde Einstichstelle 3 definiert. Der Nadelungsbereich 8 weist eine über die Fläche des Nadelungsbereichs 8 variierende Nadellochdichte auf, wobei im zentralen Bereich eine höhere Nadellochdichte vorgesehen ist. Dies erleichtert das zentrale Anstechen, wobei der Trinkhalm (bzw. das Einstechwerkzeug) automatisch in den Bereich der höheren Nadellochdichte gleitet. Gegebenenfalls können die Längserstreckungen der Nadellöcher auch zur Mitte hin ausgerichtet werden, um diesen Effekt zu verstärken.

In Fig. 7 ist ein rechteckiger Nadelungsbereich 8 dargestellt, der sich über ein relativ großen Bereich erstreckt, und der an einer beliebigen Stelle mit einem Trinkhalm durchstoßen werden kann. Dazu sind mehrere Häufungsbereiche 20 in dem Nadelungsbereich 8 angeordnet, in denen die Nadelung eine höhere Nadellochdichte aufweist. In den restlichen Bereichen ist eine Nadelung mit einer geringeren Nadellochdichte vorgesehen. Egal an welcher Stelle im Nadelungsbereich 8 der Trinkhalm (oder das Einstichwerkzeug) angesetzt wird, er gleitet automatisch in einen der Häufungsbereiche 20, wo die Verbundfolie leicht durchstoßen werden kann.

Die erfindungsgemäßen Lehren dieser Offenbarung lassen sich nicht nur zur Herstellung einer Verpackung 2 für Getränkeprodukte nutzen, sondern allgemein für die Herstellung von Verpackungen, die Einstichöffnungen aufweisen. So können beispielsweise auch chemische Produkte, wie etwa Reinigungsmittel, oder pastöse Massen, wie etwa Kleberkomponenten, in Verpackungseinheiten abgepackt werden, die eine Einstichstelle gemäß der Erfindung aufweist. Diese kann dann gezielt etwa mit einem Dorn durchstochen werden, ohne dass die Verpackung an anderer Stelle einreißt, und der Inhalt kann über das an der Einstichstelle gebildete Loch aus der Verpackung gedrückt werden. Als Einstichwerkzeug kann auch ein auf der Verpackung angeordneter (oder an die Außenseite der Verpackung aufgesiegelter oder angeklebter) Spout vorgesehen sein.

**Bezugszeichen:**

| |
|---|
| Verbundfolie 1 |
| Verpackung 2 |
| Einstichstelle 3 |
| Trinkhalm 4 |
| Innenschicht 5 |
| Mittelschicht 6 |
| Außenschicht 7 |
| Nadelungsbereich 8 |
| Nadellöchern 9 |
| Siegelnaht 10 |
| Bedruckschicht 11 |
| Nadelwalze 12 |
| Nadeln 13 |
| Gegendruckwalze 14 |
| Nadelbereiche 15 |
| erste Kaschieranlage 16 |
| zweite Kaschieranlage 17 |
| Kreis 18 |
| Rechteck 19 |
| Häufungsbereich 20 |

## Patentansprüche

1. Verbundfolie (1), insbesondere zur Herstellung Verpackungen (2), wie etwa Beutelverpackungen, mit zumindest einem für eine Einstichstelle (3) vorgesehenen Bereich, beispielsweise für einen Trinkhalm (4), wobei die Verbundfolie (1) zumindest eine siegelbare Innenschicht (5), gegebenenfalls zumindest eine Mittelschicht (6) und zumindest eine Außenschicht (7) aufweist, **dadurch gekennzeichnet, dass** in der Verbundfolie (1) an dem zumindest einen für die Einstichstelle (3) in der Verpackung (2) vorgesehenen Bereich ein Nadelungsbereich (8) mit einer Vielzahl an Nadellöchern (9) vorgesehen ist, wobei die Nadellöcher (9) in einem flächigen Muster angeordnet sind und die Verbundfolie (1) nicht vollständig durchdringen.

2. Verbundfolie (1) nach Anspruch 1, **dadurch gekennzeichnet, dass** die Nadellöcher (9) die Außenschicht (7) vollständig durchdringen, wobei die Innenschicht (5) und gegebenenfalls die Mittelschicht (6) unversehrt sind.

3. Verbundfolie (1) nach Anspruch 1 oder 2, **dadurch gekennzeichnet, dass** die Innenschicht (5) ein siegelbares Material, vorzugsweise Polyethylen, aufweist, und/oder dass zumindest eine Mittelschicht (6) eine Gasbarriereschicht, vorzugsweise aus einem Metall, insbesondere Aluminium, ist, und/oder dass die Außenschicht (7) ein die Zug- und/oder Durchstoßfestigkeit der Verbundfolie erhöhendes Material, vorzugsweise aus einem Polyester, insbesondere Polyethylenterephthalat, aufweist.

4. Verbundfolie (1) einem der Ansprüche 1 bis 3, **dadurch gekennzeichnet, dass** zwischen der Mittelschicht (6) und der Außenschicht (7) und/oder an der der Mittelschicht (6) gegenüberliegenden Oberfläche der Außenschicht (7) eine Bedruckschicht (11) vorgesehen ist.

5. Verbundfolie (1) nach einem der Ansprüche 1 bis 4, **dadurch gekennzeichnet, dass** die Nadellöcher (9) in einer parallel zur äußeren Oberfläche der Außenschicht (7) verlaufenden Ebene einen länglichen, vorzugsweise etwa rautenförmigen Querschnitt mit einer Länge (l) und einer Breite (b) aufweisen, wobei das mittlere Längenverhältnis (l/b) von Länge (l) zu Breite (b) der Nadellöcher (9) in einem Bereich zwischen etwa 2 und 5 liegt und wobei die Nadellöcher (9) an der äußeren Oberfläche der Außenschicht (7) vorzugsweise eine durchschnittliche Länge (l) zwischen 50 µm und 600 µm aufweisen.

6. Verbundfolie (1) nach einem der Ansprüche 1 bis 5, **dadurch gekennzeichnet, dass** die Außenschicht (7) im Nadelungsbereich (8) eine Nadellochdichte zwischen 50 und 250 Nadellöchern (9) pro cm² aufweist.

7. Verbundfolie (1) nach einem der Ansprüche 1 bis 5, **dadurch gekennzeichnet, dass** zumindest ein Nadelungsbereich (8) eine über die Fläche des Nadelungsbereichs (8) variierende Nadellochdichte aufweist.

8. Verpackung (2) mit einer Verbundfolie (1) gemäß einem der Ansprüche 1 bis 7, wobei die Verpackung vorzugsweise als Beutelverpackung ausgebildet ist.

9. Verfahren zur Herstellung einer Verpackung (2), **dadurch gekennzeichnet, dass** eine Verbundfolie (1) nach einem der Ansprüche 1 bis 7 gegebenenfalls zugeschnitten, zu der Verpackung (2) geformt, mit einem Produkt befüllt und versiegelt wird.

10. Verfahren zur Herstellung einer Verbundfolie (1), wobei zumindest eine siegelbare Innenschicht (5), gegebenenfalls zumindest eine Mittelschicht (6) und zumindest eine Außenschicht (7) in einer Schichtfolge
a) Innenschicht(en) (5)
b) gegebenenfalls Mittelschicht(en) (6)
c) Außenschicht(en) (7)
aneinander kaschiert werden, **dadurch gekennzeichnet, dass** an zumindest einem für eine Einstichstelle (3) in einer Verpackung (2) vorgesehenen Bereich der Verbundfolie (1) zumindest ein Nadelungsbereich (8) mit einer Vielzahl an Nadellöchern (9) in die Außenschicht (7) eingebracht wird, wobei die Nadellöcher (9) im Nadelungsbereich (8) in einem flächigen Muster angeordnet sind und die Verbundfolie (1) nicht vollständig durchdringen.

11. Verfahren nach Anspruch 10, **dadurch gekennzeichnet, dass** der zumindest eine Nadelungsbereich (8) vor dem Kaschieren der Außenschicht (7) mit der Mittelschicht (6) und/oder der Innenschicht (5) in die Außenschicht (7) eingebracht wird.

12. Verfahren nach Anspruch 10 oder 11, **dadurch gekennzeichnet, dass** die Nadellöcher (9) mittels einer Nadelwalze (12) mit an der Nadelwalze (12) vorgesehenen Nadeln (13) in die Außenschicht (7) eingebracht werden, wobei die Nadelwalze (12) vorzugsweise den Nadelungsbereichen (8) entsprechende Nadelbereiche (15) aufweist, in denen die Nadelwalze (12) insbesondere eine Nadeldichte zwischen 50 und 250 Nadeln (13) pro cm² aufweist.

13. Verfahren nach Anspruch 12, **dadurch gekennzeichnet, dass** die Nadelungsbereiche (8) nach einem Bedrucken der Außenschicht (7) in die Außenschicht (7) eingebracht werden.

14. Verfahren nach Anspruch 12 oder 13, **dadurch gekennzeichnet, dass** die Nadellöcher (9) mit auf der Nadelwalze (12) vorgesehenen Nadeln (13) eingebracht werden, die einen länglichen, vorzugsweise im Wesentlichen rautenförmigen Querschnitt aufweisen, wobei der Querschnitt der Nadeln (13) an deren Basis eine Länge (L) und eine Breite (B) aufweist, wobei das mittlere Längenverhältnis (L/B) von Länge (L) zu Breite (B) der Querschnitte der Nadeln (13) vorzugsweise in einem Bereich zwischen etwa 2 und etwa 5 liegt.

15. Verfahren nach Anspruch 14, **dadurch gekennzeichnet, dass** die Nadeln (13) eine Höhe (H) von zwischen etwa 150 µm und 350 µm, vorzugsweise etwa 150 µm, aufweisen und an ihrer Basis eine Länge (L) von zwischen etwa 50 µm bis etwa 600 µm und eine Breite (B) von zwischen etwa 50 µm und etwa 100 µm, vorzugsweise etwa 80 µm aufweisen.

## Claims

1. Composite film (1), in particular for producing packaging (2), such as pouch packaging, having at least one region provided for a puncture site (3), for example for a drinking straw (4), the composite film (1) having at least one sealable inner layer (5), optionally at least one middle layer (6) and at least one outer layer (7), **characterized in that**, in the composite film (1), a needling region (8) having a plurality of needle holes (9) is provided on the at least one region provided for the puncture site (3) in the packaging (2), the needle holes (9) being arranged in a surface pattern and not completely penetrating the composite film (1).

2. Composite film (1) according to claim 1, **characterized in that** the needle holes (9) completely penetrate the outer layer (7), with the inner layer (5) and optionally the middle layer (6) being intact.

3. Composite film (1) according to either claim 1 or claim 2, **characterized in that** the inner layer (5) has a sealable material, preferably polyethylene, and/or **in that** at least one middle layer (6) is a gas barrier layer, preferably made of a metal, in particular aluminum, and/or **in that** the outer layer (7) has a material which increases the tensile strength and/or puncture resistance of the composite film, which material is preferably made of a polyester, in particular polyethylene terephthalate.

4. Composite film (1) according to any of claims 1 to 3, **characterized in that** a printing layer (11) is provided between the middle layer (6) and the outer layer (7) and/or on the surface of the outer layer (7) opposite the middle layer (6).

5. Composite film (1) according to any of claims 1 to 4, **characterized in that** the needle holes (9) in a plane extending in parallel with the outer surface of the outer layer (7) have an elongate, preferably approximately diamond-shaped cross section having a length (I) and a width (b), the average aspect ratio (l/b) of length (l) to width (b) of the needle holes (9) being in a range of between approximately 2 and 5 and the needle holes (9) on the outer surface of the outer layer (7) preferably having an average length (I) of between 50 µm and 600 µm.

6. Composite film (1) according to any of claims 1 to 5, **characterized in that** the outer layer (7), in the needling region (8), has a needle hole density of between 50 and 250 needle holes (9) per cm².

7. Composite film (1) according to any of claims 1 to 5, **characterized in that** at least one needling region (8) has a needle hole density which varies over the surface of the needling region (8).

8. Packaging (2) having a composite film (1) according to any of claims 1 to 7, wherein the packaging is preferably designed as pouch packaging.

9. Method for producing a packaging (2), **characterized in that** a composite film (1) according to any of claims 1 to 7 is optionally cut, shaped to form the packaging (2), filled with a product, and sealed.

10. Method for producing a composite film (1), wherein at least one sealable inner layer (5), optionally at least one middle layer (6) and at least one outer layer (7) are laminated to one another in a layer sequence
a) inner layer(s) (5)
b) optionally middle layers(s) (6)
c) outer layer(s) (7),
**characterized in that**, at at least one region of the composite film (1) provided for a puncture site (3) in a packaging (2), at least one needling region (8) having a plurality of needle holes (9) is introduced into the outer layer (7), the needle holes (9) in the needling region (8) being arranged in a surface pattern and not completely penetrating the composite film (1).

11. Method according to claim 10, **characterized in that** the at least one needling region (8) is introduced into the outer layer (7) before the outer layer (7) is laminated to the middle layer (6) and/or to the inner layer (5).

12. Method according to either claim 10 or claim 11, **characterized in that** the needle holes (9) are introduced into the outer layer (7) by means of a needle roller (12) having needles (13) provided on the needle roller (12), the needle roller (12) preferably having needle regions (15) corresponding to the needling regions (8), in which needle regions the needle roller (12) in particular has a needle density of between 50 and 250 needles (13) per cm².

13. Method according to claim 12, **characterized in that** the needling regions (8) are introduced into the outer layer (7) after the outer layer (7) has been printed.

14. Method according to either claim 12 or claim 13, **characterized in that** the needle holes (9) are introduced using needles (13) provided on the needle roller (12), which needles have an elongate, preferably substantially diamond-shaped cross section, the cross section of the base of the needles (13) having a length (L) and a width (B), the average aspect ratio (L/B) of length (L) to width (B) of the cross sections of the needles (13) preferably being in a range of between approximately 2 and approximately 5.

15. Method according to claim 14, **characterized in that** the needles (13) have a height (H) of between approximately 150 µm and 350 µm, preferably approximately 150 µm, and the base of said needles has a length (L) of approximately 50 µm to approximately 600 µm and a width (B) of between approximately 50 µm and approximately 100 µm, preferably approximately 80 µm.

## Revendications

1. Film composite (1), en particulier pour la fabrication d'emballages (2), tels que des sachets d'emballage, comprenant au moins une zone prévue pour un point de piqûre (3), par exemple pour une paille (4), le film composite (1) présentant au moins une couche intérieure (5) pouvant être scellée, éventuellement au moins une couche centrale (6) et au moins une couche extérieure (7), **caractérisé en ce que,** dans le film composite (1), une zone d'aiguilletage (8) comportant une pluralité de trous d'aiguilles (9) est prévue au niveau de l'au moins une zone prévue pour le point de piqûre (3) dans l'emballage (2), les trous d'aiguilles (9) étant disposés selon un motif plan, et ne traversant pas entièrement le film composite (1).

2. Film composite (1) selon la revendication 1, **caractérisé en ce que** les trous d'aiguilles (9) traversent entièrement la couche extérieure (7), la couche intérieure (5) et éventuellement la couche centrale (6) étant intactes.

3. Film composite (1) selon la revendication 1 ou 2, **caractérisé en ce que** la couche intérieure (5) comporte un matériau pouvant être scellé, de préférence du polyéthylène, et/ou **en ce qu'**au moins une couche centrale (6) est une couche de barrière aux gaz, de préférence en métal, en particulier en aluminium, et/ou **en ce que** la couche extérieure (7) comporte un matériau, de préférence en polyester, en particulier en polyéthylène téréphtalate, lequel matériau augmente la résistance du film composite à la traction et/ou à la perforation.

4. Film composite (1) selon l'une des revendications 1 à 3, **caractérisé en ce qu'**une couche d'impression (11) est prévue entre la couche centrale (6) et la couche extérieure (7) et/ou sur la surface de la couche extérieure (7) opposée à la couche centrale (6).

5. Film composite (1) selon l'une des revendications 1 à 4, **caractérisé en ce que** les trous d'aiguilles (9) comportent une section transversale allongée, de préférence approximativement en forme de losange, ayant une longueur (l) et une largeur (b), dans un plan parallèle à la surface extérieure de la couche extérieure (7), le rapport d'allongement moyen (l/b) entre la longueur (l) et la largeur (b) des trous d'aiguilles (9) étant compris entre environ 2 et 5, et les trous d'aiguilles (9) sur la surface extérieure de la couche extérieure (7) ayant de préférence une longueur moyenne (l) comprise entre 50 et 600 µm.

6. Film composite (1) selon l'une des revendications 1 à 5, **caractérisé en ce que** la couche extérieure (7) présente une densité de trous d'aiguilles dans la zone des trous d'aiguilles (8) comprise entre 50 et 250 trous d'aiguilles (9) par cm².

7. Film composite (1) selon l'une des revendications 1 à 5, **caractérisé en ce qu'**au moins une zone d'aiguilletage (8) présente une densité de trous d'aiguilles variant sur la surface de la zone d'aiguilletage (8).

8. Emballage (2) comportant un film composite (1) selon l'une des revendications 1 à 7, l'emballage étant de préférence réalisé sous la forme d'un sachet d'emballage.

9. Procédé de fabrication d'un emballage (2), **caractérisé en ce qu'**un film composite (1) selon l'une des revendications 1 à 7 est éventuellement découpé, façonné en forme d'emballage (2), rempli d'un produit et scellé.

10. Procédé de fabrication d'un film composite (1), selon lequel au moins une couche intérieure (5) pouvant être scellée, éventuellement au moins une couche centrale (6) et au moins une couche extérieure (7) sont stratifiées l'une sur l'autre dans une séquence
a) de couche(s) intérieure(s) (5)
b) éventuellement de couche(s) centrale(s) (6)
c) de couche(s) extérieure(s) (7)
**caractérisé en ce qu'**au moins une zone d'aiguilletage (8) comportant une pluralité de trous d'aiguilles (9) est réalisée dans la couche extérieure (7) au niveau d'au moins une zone du film composite (1) prévue pour un point de piqûre (3) dans un emballage (2), les trous d'aiguilles (9) étant disposés dans la zone d'aiguilletage (8) selon un motif plan, et ne traversant pas entièrement le film composite (1).

11. Procédé selon la revendication 10, **caractérisé en ce que** l'au moins une zone d'aiguilletage (8) est réalisée dans la couche extérieure (7) avant que la couche extérieure (7) ne soit laminée avec la couche centrale (6) et/ou la couche intérieure (5).

12. Procédé selon la revendication 10 ou 11, **caractérisé en ce que** les trous d'aiguilles (9) sont réalisés dans la couche extérieure (7) au moyen d'un rouleau à aiguilles (12) comportant des aiguilles (13) prévues au niveau du rouleau à aiguilles (12), le rouleau à aiguilles (12) comportant de préférence des zones d'aiguilles (15) correspondant aux zones d'aiguilletage (8), le rouleau à aiguilles (12) présentant en particulier une densité d'aiguilles comprise entre 50 et 250 aiguilles (13) par cm².

13. Procédé selon la revendication 12, **caractérisé en ce que** les zones d'aiguilletage (8) sont réalisées dans la couche extérieure (7) après l'impression de la couche extérieure (7).

14. Procédé selon la revendication 12 ou 13, **caractérisé en ce que** les trous d'aiguilles (9) sont réalisés à l'aide d'aiguilles (13) prévues sur le rouleau à aiguilles (12), lesquelles aiguilles présentent une section transversale allongée, de préférence sensiblement en forme de losange, la section transversale des aiguilles (13) ayant une longueur (L) et une largeur (B) au niveau de sa base, le rapport d'allongement moyen (L/B) entre la longueur (L) et la largeur (B) des sections transversales des aiguilles (13) étant de préférence compris entre environ 2 et environ 5.

15. Procédé selon la revendication 14, **caractérisé en ce que** les aiguilles (13) ont une hauteur (H) comprise entre environ 150 et 350 µm, de préférence d'environ 150 µm, et ont, au niveau de leur base, une longueur (L) comprise entre environ 50 et environ 600 µm et une largeur (B) comprise entre environ 50 et environ 100 µm, de préférence d'environ 80 µm.
